# FASCICULE DE BREVET EUROPEEN

(11) **EP 0 916 033 B1**
(45) Date de publication et mention de la délivrance du brevet: **14.01.2004**
(21) Numéro de dépôt: 98928377.5
(22) Date de dépôt: 28.05.1998
(51) Int. Cl.: F16D 13/64

(54) **DISQUE DE FRICTION PROGRESSIF POUR FRICTION D'EMBRAYAGE, NOTAMMENT DE VEHICULE AUTOMOBILE**
PROGRESSIVE REIBUNGSSCHEIBE FÜR REIBUNGSKUPPLUNG INSBESONDERE FÜR KRAFTFAHRZEUGE
FRICTION DISK WITH SMOOTH ENGAGEMENT FOR CLUTCH FRICTION, IN PARTICULAR FOR MOTOR VEHICLES

(30) Priorité: 30.05.1997 FR 9706686
(43) Date de publication de la demande: 19.05.1999
(73) Titulaire: VALEO EMBRAYAGES s.a.s., 80009 Amiens Cedex 1 (FR)
(72) Inventeur: FEDERZONI, Luc, F-87260 Vicq sur Breuilh (FR); ALAS, Jacques, F-87800 St. Priest Ligoure (FR)
(74) Mandataire: Lemaire, Marc
(86) Numéro de dépôt international: PCT/FR1998/001070
(87) Numéro de publication internationale: WO 1998/054480

(56) Documents cités:
- EP-A- 0 419 329
- DE-A- 2 111 892
- FR-A- 983 867
- FR-A- 2 714 432
- GB-A- 566 572
- US-A- 1 956 828
- US-A- 2 037 928
- US-A- 2 521 138
- US-A- 5 226 516

## Description

La présente invention se rapporte à un disque de friction pour friction d'embrayage, notamment de véhicule automobile, comportant deux supports parallèles avec chacun une partie périphérique externe, agencée radialement vers l'extérieur, de forme générale annulaire plane prolongée radialement vers le centre par des zones de fixation à une pièce principale de la friction d'embrayage, deux garnitures de friction disposées de part et d'autre des deux supports et chacune adhérisée, surmoulée ou agrafée sur l'un des supports, au moins un élément de progressivité en matière élastique, formant ressort, interposé entre les deux supports.

Un tel disque de friction est décrit par exemple dans le document FR-A-2 673 984.

Par cette disposition on réduit l'inertie de la friction d'embrayage, grâce au mode de fixation des garnitures de friction permettant de réduire l'épaisseur de celles-ci, tout en ayant une bonne progressivité lors du serrage des garnitures de friction entre les plateaux de pression et de réaction de l'embrayage au sein duquel intervient la friction d'embrayage. En outre les supports peuvent être de faible épaisseur car chacun d'eux ne transmet que la moitié du couple.

Néanmoins, du fait que les zones de fixation sont dotées d'au moins un trou pour le passage d'un organe de fixation à la pièce principale de la friction d'embrayage, il se pose un problème car la fixation du disque sur l'une des pièces principales de la friction d'embrayage entraîne un bridage à ce niveau, ce qui entraîne un écrasement local de l'élément de progressivité.

Il en résulte une différence de raideur entre la périphérie interne et externe de l'élément de progressivité.

Cette différence de raideur perturbe les propriétés de frottement et d'usure des garnitures de friction.

La présente invention a pour objet de palier ces inconvénients de manière simple et économique.

Suivant l'invention un disque de friction du type sus indiqué dans lequel les zones de fixation sont délimitées chacune par au moins un trou pour le passage d'un organe de fixation à la pièce principale de la friction d'embrayage, est caractérisé en ce que chaque support comporte radialement au delà des zones de fixation, en regard de celles-ci, des fentes globalement d'orientation circonf érentielle et en ce qu'une fente circonférentielle est prévue par zone de fixation.

Grâce à l'invention on obtient un découplage entre les fonctions de fixation et de progressivité et ce de manière simple et économique à l'aide de fentes circonférentielles de forme oblongue obtenues par découpage lorsque les supports sont métalliques ou par moulage lorsque les supports sont en matériaux composites c'est-à-dire à base de matière synthétique par exemple renforcée par fibres telle que des fibres de verre. L'élément de progressivité n'est ainsi pas bridé.

La longueur circonférentielle des fentes dépend du couple à transmettre et donc de la quantité de matière présente entre les zones de fixation et les fentes. Cette longueur tient compte de l'homogénéité de la répartition de la pression axiale.

Cette longueur est donc un compromis entre ces données.

Les fentes circonférentielles s'étendent au droit des zones de fixation préférentiellement séparée les unes des autres, en variante reliées les unes aux autres par de la matière.

Une fente est prévue de préférence par zone de fixation pour obtention d'une meilleure homogénéité du pincement (de l'écrasement) de l'élément de progressivité.

Chaque support est de préférence crénelé à sa périphérie interne pour formation d'une série de zones de fixation, par exemple sous forme de pattes allongées circonférentiellement.

Grâce à cette disposition on favorise encore un meilleur découplage entre les fonctions de fixation et de progressivité du fait que les zones de fixation sont discontinues.

Les fentes circonférentielles couvrent tout ou en partie les zones de fixation en s'étendant au droit de celles-ci.

De préférence des premières fentes, débouchant à la périphérie externe des supports métalliques, sont prévues dans chaque support.

Le but est de créer ainsi des pales radialement flexibles permettant d'accompagner les garnitures de friction lors d'une sollicitation thermique et d'éviter des mises en cône. Cela permet également d'alléger les supports et de réduire les contraintes thermiques. Cela évite les effets de bilame dues à l'échauffement du disque de friction en service, dont les garnitures de friction sont adaptées à être serrées entre les plateaux de pression et de réaction de l'embrayage.

L'effet de bilame est du au fait que les garnitures de friction ont un coefficient de dilatation différent de celui des supports.

Les premières fentes peuvent être distinctes des fentes circonférentielles ou déboucher de manière symétrique ou asymétrique dans celles-ci.

Ces premières fentes peuvent déboucher à l'une des extrémités de la fente circonférentielle associée.

De préférence des rayons de raccordement les plus grand possible sont prévus pour raccorder une première fente à une fente circonférentielle et réduire les contraintes.

De préférence les premières fentes sont agencées pour créer des pales asymétriques notamment pour transmettre plus de couple dans un sens que dans l'autre et assouplir encore plus les pales.

Pour ce faire, dans une forme de réalisation, les premières fentes sont inclinées par rapport à une direction radiale. En jouant sur l'angle d'inclinaison des premières fentes par rapport à une direction radiale on réalise une optimisation de la résistance à la centrifugation des pales, délimitées par les premières fentes, en symétriquant les masses qui tirent sur les pales, tout en ayant des pales asymétriques pour une bonne optimisation de la tenue au couple.

L'angle d'inclinaison peut être positif ou négatif.

Les premières fentes peuvent être dans une autre forme de réalisation d'orientation radiale pour obtenir une bonne résistance à la centrifugation.

A chaque fente circonférentielles il n'est pas forcément associée une première fente. Des emboutis peuvent relier entre elles deux fentes circonférentielles pour encore un meilleur découplage des fonctions.

La description qui va suivre illustre l'invention en regard des dessins annexés dans lesquels :
- la figure 1 est une vue en perspective éclatée d'un disque de friction selon l'invention, pour une friction d'embrayage de véhicule automobile ;
- les figures 2 et 3 sont des dessins vus en coupe d'une friction d'embrayage non équipée de son disque de friction pour deux modes de réalisation différentes ;
- la figure 4 est une vue partielle en coupe axiale d'un disque de friction monté sur une pièce principale de la friction d'embrayage pour un autre mode de réalisation ;
- la figure 5 est une vue montrant le disque de friction de la figure 1 monté sur la pièce principale de la friction d'embrayage ;
- les figures 6 à 15 montrent différentes formes de fentes réalisées dans les supports.

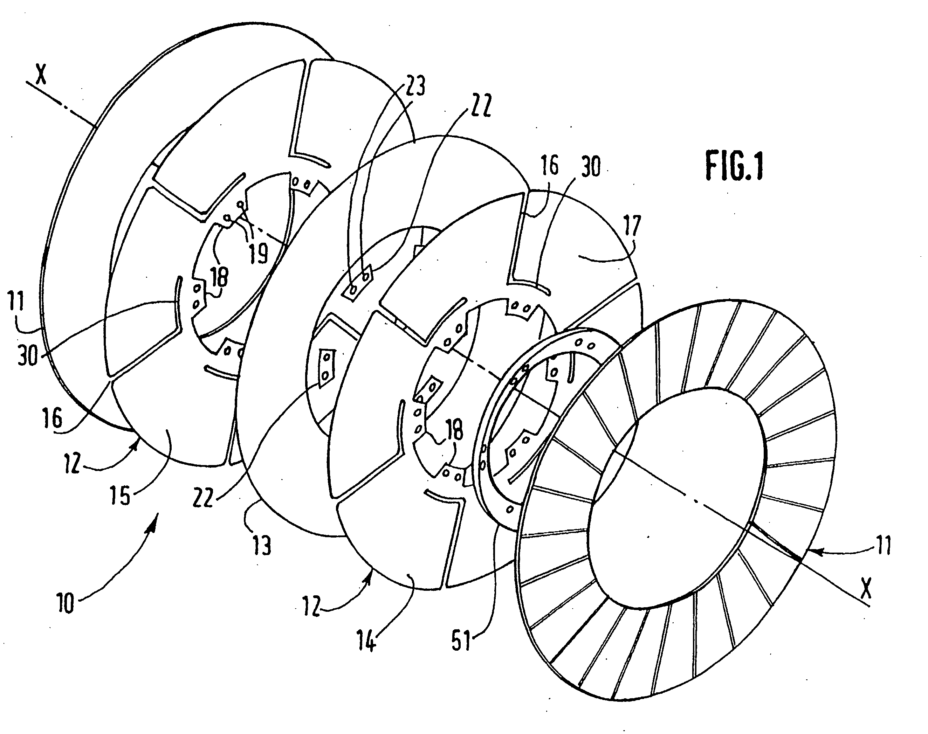

Le disque de friction 10 représenté dans la figure 1 forme l'élément d'entrée d'une friction d'embrayage à frottement sec et est accouplé de manière élastique ou rigide à un élément de sortie, tel qu'un moyeu cannelé intérieurement, de ladite friction pour sa liaison en rotation à un arbre mené.

S'agissant d'une application pour véhicule automobile l'arbre mené consiste en l'arbre d'entrée d'une transmission, tel que l'arbre d'entrée de la boîte de vitesses.

Lorsque l'embrayage est engagé - disque de friction 10 serré entre les plateaux de pression et de réaction de l'embrayage - le couple est transmis d'un arbre menant, à savoir le vilebrequin du moteur du véhicule dans cette application, audit arbre d'entrée via le disque de friction 10.

Ce disque 10 comporte dans l'exemple de réalisation représenté un ensemble de pièces annulaires et coaxiales, d'axe de symétrie axiale X-X à savoir : deux garnitures de friction 11 disposées de part et d'autre de deux supports métalliques 12 et parallèles, eux mêmes disposés de part et d'autre d'au moins un élément de progressivité 13 en matière élastique formant ressort.

Chaque support 12 est ici de forme plane et comporte donc une face externe 14 adjacente à une garniture de friction 11 et une face interne 15 adjacente à l'élément de progressivité 13. Les faces internes 15 sont en vis-à-vis l'une de l'autre.

Chaque support 12 est réalisé par découpage d'une tôle mince. En variante chaque support 12 est en matériau composite.

Les supports sont relativement de faible épaisseur car ils ne transmettent que la moitié du couple à l'élément de sortie de la friction d'embrayage.

L'épaisseur des supports dépend donc du couple à transmettre.

Les garnitures de friction 11, ici en forme d'anneau plan continu, sont fixées sur les faces externes 14 planes des supports 12 par une liaison dépourvue de rivets afin notamment, de manière connue, de diminuer l'inertie de la friction d'embrayage. En outre, on peut choisir plus librement la nature du matériau de frottement des garnitures de friction car celui-ci n'est pas déterminé par une résistance mécanique à respecter en fonction du rivetage. Les garnitures de friction 11 sont ici identiques. En variante les garnitures de friction 11 peuvent être différentes. Par exemple elles peuvent avoir des coefficients de frottements différents, en étant de nature différente.

Ici chaque garniture de friction 11 est fixée par adhérisation, par exemple collage, brasage ou par surmoulage sur une portion annulaire en vis-à-vis de la face externe 14 du support 12 concerné.

En variante chaque garniture de friction 11 est fixée par agrafage au support 12 concerné comme décrit par exemple dans le document DE-A-196 26 688. Chaque support 12 présente alors par exemple deux séries de pattes rabattues dans deux séries d'encoches que présente de manière complémentaire chaque garniture de friction 11. Par exemple les deux séries d'encoches sont ménagées à la périphérie interne et à la périphérie externe de chaque garniture de friction 11. En variante les garnitures 11 sont fragmentées en secteurs annulaires.

Les faces frontales, tournées à l'opposé des supports 12, des garnitures de friction 11 sont propres à être serrées entre les plateaux de pression et de réaction de l'embrayage. Les garnitures de friction 11 s'échauffent donc en service lorsque le véhicule roule suite aux opérations d'embrayage et de débrayage successives et il en est de même, de manière connue, des plateaux de pression et de réaction.

Ces plateaux de pression et de réaction peuvent atteindre des températures non négligeables et se mettre en cône à cause des gradients de température, une face desdits plateaux étant plus froide que l'autre face desdits plateaux.

Il peut substituer une mise en cône résiduelle notamment du plateau de pression.

De la même manière par échauffements les garnitures de friction 11 et les supports 12 peuvent se mettre en cône.

En outre les garnitures de friction 11 ont un coefficient de dilatation différent de celui des supports 12 soumis alors à des contraintes thermiques.

Ici chaque support 12 est doté de premières fentes 16, décrites ci-après, qui débouchent à la périphérie externe du support 12. D'une manière générale les fentes 16 permettent d'éviter les déformations dues à un échauffement en service et de diminuer les contraintes. Ces fentes 16 permettent d'alléger les supports 12 et d'augmenter leur flexibilité.

Chaque support 12 comporte une partie périphérique externe 17, agencée radialement vers l'extérieur, de forme générale annulaire plane continue. C'est dans cette partie périphérique 17 que sont ménagées les fentes 16. C'est sur cette partie périphérique qu'est fixée la garniture de friction 11 concernée. Cette partie périphérique 17 est prolongée radialement vers l'intérieur par une série de zones de fixation 18 réparties régulièrement circulairement. Ces zones de fixation 18 sont allongées circonférentiellement et consistent ici en des pattes. Ces pattes 18 ont globalement une forme trapézoïdale et sont trouées en 19 pour le passage d'un ou plusieurs organes de fixation 20. Ici deux trous 19 sont prévus par pattes.

Les pattes 18 ont circonférentiellement une taille supérieure à celle de leur hauteur. Ainsi les supports 12 sont crénelés à leur périphérie interne. En variante un trou 19 peut être prévu par patte 18, alors plus haute que longue circonférentiellement. En variante les zones de fixation 18 sont reliées ente elles et appartiennent à un anneau continu, chaque zone 18 étant définie par le ou les trous 19. Ici les zones de fixation sont donc dans le même plan que la partie périphérique.

L'élément de progressivité 13 consiste ici en un anneau continu de matériau déformable élastiquement, qui est interposé entre les faces internes 15 en vis-à-vis des supports 12 dans leurs zones périphériques 17 planes en regard des garnitures de friction 11 annulaires et coaxiales.

L'élément de progressivité 13, ici en matière élastique telle que de l'élastomère ou du caoutchouc, est utile pour le confort de l'usager et pour l'obtention d'une transmission progressive du couple lors du réengagement de l'embrayage.

Cet élément de progressivité 13 permet avantageusement aux garnitures de friction 11 d'épouser la forme des plateaux de pression et de réaction, notamment lors de l'engagement de l'embrayage, et donc de réduire les usures. On notera que la faible épaisseur des supports 12 favorise cela.

L'anneau 13 peut comporter des agents d'expansion et être par exemple à base de silicone expansé.

L'anneau 13 peut être réalisé en matériau cellulaire possédant des cellules ou alvéoles ouvertes et/ou fermées qui permettent, sous l'effet des contraintes de compression, de provoquer la diminution d'épaisseur du matériau, et, lorsque cessent de telles contraintes, de provoquer un retour à l'épaisseur d'origine. Cet anneau peut être formé à partir des matériaux appartenant au groupe comprenant les mousses d'élastomère comme décrit dans le document FR-A-2 673 984 auquel on pourra se reporter pour plus de précisions.

Ici l'anneau 13 a une dimension radiale identique à celle des garnitures de friction.

En variante l'anneau 13 peut être remplacé par une pluralité de protubérances comme décrit dans les documents US-A-5 076 409 et FR-A-2 652 397 auxquelles on pourra également se reporter.

Bien entendu il peut s'agir d'un cordon enroulé en spirale sur les parties périphériques 17, ou de bandes adhésives agencées en cercles concentriques et fixées sur les parties périphériques.

L'anneau 13 ou les protubérances en matière élastique, telle que de l'élastomère ou du caoutchouc son fixées par adhérisation, par exemple par collage, ou vulcanisation in situ, aux faces internes 15 des supports 12.

Bien entendu certaines protubérances ne peuvent qu'être fixées à l'un des deux supports 12 comme décrits dans les documents US-A-5 076 409 et FR-A-2 5652 397. Dans tous les cas l'élément de progressivité est interposé entre les parties périphériques des deux supports 12 et est fixé à au moins l'un des deux supports 12. En variante l'anneau 13 est monté flottant entre les deux supports 12, sans être lié à ceux-ci.

Ici six fentes 16 et six zones de fixation 18 sont prévues. Chaque zone de fixation 18 comporte deux trous 19 pour le passage d'organes de fixation 20 ici en forme de rivets. Bien entendu ces nombres dépendent des applications.

Pour maintenir le parallélisme entre les deux supports, notamment sous charge, des cales 22 sont intercalées entre les deux zones de fixation 18 en vis-à-vis des deux supports 12. Les cales 22 ont une forme semblable aux zones de fixation 18. Les cales 22 sont donc ici allongées circonférentiellement en étant circonférentiellement de taille (dimension) plus grande que haute. Les cales présentent chacune deux trous 23 en coïncidence axiale avec les trous 19 des zones de fixation pour passage des organes de fixation en forme de rivets, en variante de colonnettes ou de vis.

Les cales 22 sont destinées à être interposées entre les faces internes en vis-à-vis des zones de fixation 18 en étant fixées à celles-ci. Les supports 12 peuvent être ainsi de forme plane.

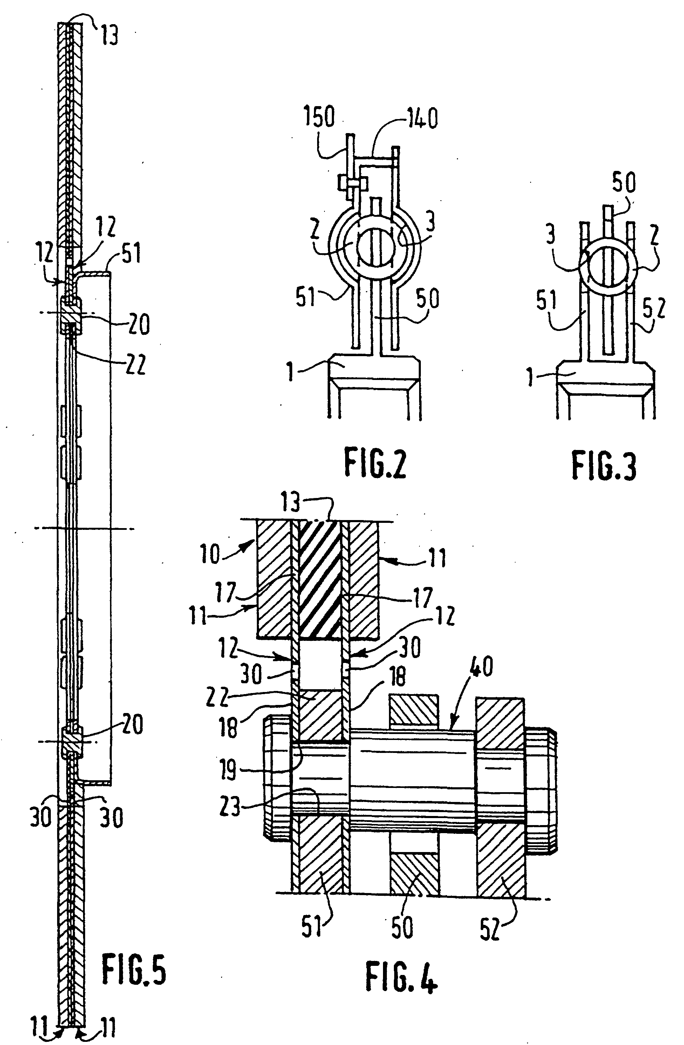

Ici les supports 12 sont identiques et le disque de friction 10 forme par avance un sous ensemble unitaire sans les cales 22. Pour la fabrication de ces sous ensemble unitaire on se reportera par exemple au document FR-A-2 673 984 et plus particulièrement à la figure 3 de celui-ci montrant le moule. L'élément de progressivité 13 en forme d'anneau est donc fixé sur la partie périphérique externe 17 de chaque anneau 12. Ce sous ensemble peut être monté sur les cales 22 par un montage du type baïonnette comme décrit dans le document FR-A-2 737 267 du fait que les zones de fixation 18 alternent avec des dégagements formés naturellement entre deux zones de fixation 18.

Comme visible dans les figures 2 à 4 les cales peuvent appartenir à un disque 150 accolé et fixé à l'une des rondelles de guidage 51 de friction d'embrayage (figure 2), à la rondelle de guidage 51 de ladite friction (figure 4) ou au voile 50 de ladite friction (figure 3). Les cales sont dans ce cas d'un seul tenant avec une pièce principale de la friction d'embrayage.

D'une manière générale une friction d'embrayage classique comporte deux rondelles de guidage 51, 52 disposées de part et d'autre d'un voile 50. Le voile 50 et les rondelles de guidage 51, 52 entourent un moyeu 1 formant l'élément de sortie de la friction d'embrayage à frottement sec.

Le voile 50 est accouplé aux rondelles de guidage 51 par l'intermédiaire de moyens élastiques à action circonférentielle 2, usuellement des ressorts à boudin, montés dans des logements pratiqués en vis-à-vis dans les rondelles de guidage 51 et dans le voile 50. Ces logements 3 peuvent consister en des emboutis (figure 2) ou en des fenêtres (figure 3) réalisés dans les rondelles de guidage 51, 52 et en des fenêtres (figures 2 et 3), ou en des échancrures ouvertes vers l'extérieur réalisées dans le voile 50.

Dans les figures 2 et 4 les rondelles de guidage 51, 52 sont solidaires du disque de friction 10 et entourent librement le moyeu 1, tandis que le voile 50 est solidaire en rotation du moyeu 1, éventuellement après rattrapage d'un jeu circonférentiel déterminé par des moyens d'engrènement à jeu intervenant entre le voile 50 et le moyeu 1.

A la figure 3 les structures sont inversées et les rondelles de guidage 51, 52 sont solidaires du moyeu 1, tandis que le voile 50 entoure librement le moyeu 1 et est solidaire du disque de friction 10.

A la figure 4 des entretoises en forme de colonnettes 40 relient entre elles les rondelles de guidage 51, 52 et traversent à jeu circonférentiel le voile 50 ce qui permet, de manière connue, de limiter le débattement angulaire relatif entre le voile 50 et les rondelles de guidage 51, 52.

Dans ce cas on profite des colonnettes 40 pour fixer également le disque de friction 10.

En variante comme décrit dans le document FR-A-2 411 991 les entretoises consistent en un rebord radial annulaire d'orientation axial 140 que présente la rondelle de guidage 51 à sa périphérie externe, ledit rebord étant doté de mortaises dans lesquelles sont propres à pénétrer des tenons appartenant à l'autre rondelle de guidage 52, l'assemblage étant fait par sertissage au niveau de bords des mortaises conduisant à un fluage de matière pour empiétement sur lesdits tenons. En variante on peut réaliser des opérations de soudage, toutes les variantes de ce document étant envisageable.

L'élément 150, par exemple en forme de couronne crénelée à sa périphérie externe est accolé à la rondelle de guidage en étant fixée à celle-ci.

De part sa forme il est ainsi crée des cales à la périphérie externe de l'élément 150. Le voile 50 de la figure 3 et la rondelle 51 de la figure 4 ont une forme crénelée à leur périphérie externe par formation des cales, d'un seul tenant avec lesdites pièces.

En variante les cales sont sous forme de pattes individuelles complémentaires aux pattes de fixation et sont rapportées sur la rondelle de guidage 51 de la figure 2 ou sur le voile 50 de la figure 3.

Dans tous cas les cales ont une forme complémentaire à celle des pattes de fixation 18 et le disque de friction 10 est fixé par des zones 18 à une pièce principale de la friction d'embrayage.

Le montage se fait de manière simple en introduisant par exemple les pattes de fixation 18 dans les dégagements délimités par les cales ou vice-versa, puis on effectue une rotation pour amener les trous 19 des pattes 18 en regard des trous 23 des cales. Ensuite on procède à la fixation des supports 12 sur les cales à l'aide des organes de fixation 20.

Dans l'exemple de réalisation de la figure 1 des cales 22 individuelles sont insérées par avance entre les pattes de fixation 18, puis on procède à la fixation de l'ensemble disque de friction 10 - cales individuelles 22 - sur la rondelle de guidage 51 de la figure 2, à l'aide des rivets 20, pour former un ensemble rondelle de guidage 51 - disque de friction 10 comme visible à la figure 5. Cet ensemble est manipulable et transportable et a une inertie réduite grâce aux cales individuelles 22.

Lorsque l'on procède ainsi à la fixation il se produit dans tous les cas un bridage au niveau des zones de fixation 18. Ce bridage fait sentir ses effets à la périphérie interne de l'élément de progressivité 13 dont la raideur augment ainsi.

Il en résulte une diminution des performances de l'élément de progressivité et des garnitures de friction 11, notamment en ce qui concerne les usures.

Pour remédier à ces inconvénients l'invention propose que chaque support 12 comporte radialement au delà des zones de fixation 18 (et donc des trous 19) des fentes 30 globalement d'orientation circonférentielles.

Les fentes 30 sont de forme oblongue, sont ménagées dans les parties périphériques externes 17 des supports 12, et sont en regard des zones de fixation 18.

Dans le mode de réalisation de la figure 1 une fente 30 est prévue par zone de fixation 18, ce qui permet d'avoir un très bon découplage entre les fonctions de fixation et de progressivité.

En variante certaines zones de fixation 18 peuvent être dépourvues de fentes 30. La longueur de chaque fente 30 est fonction des applications et est un compromis entre la résistance mécanique pour transmettre le couple et la qualité de l'homogénéité de la répartition de la pression axiale.

On appréciera que la série de zones de fixation 18, réparties ici de manière régulière circonférentiellement, participe au découplage entre les fonctions de fixation et de progressivité obtenues grâce aux fentes 30. Il est donc avantageux que les supports soient crénelés à la périphérie interne.

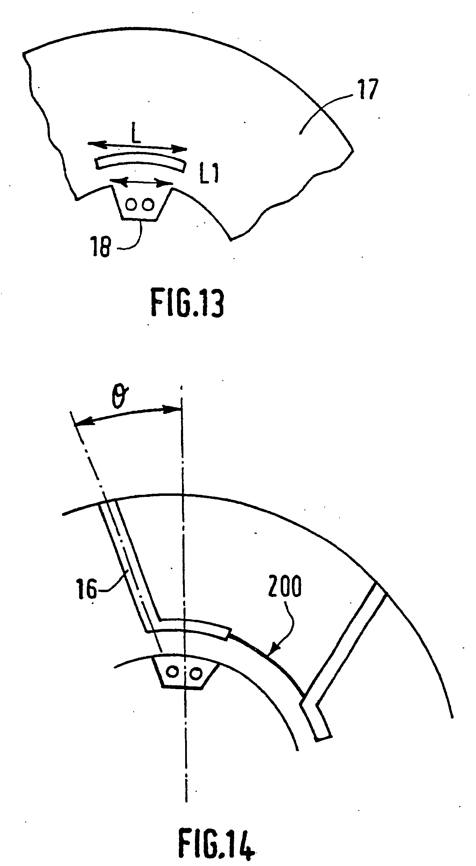

A la figure 4 une fente circonférentielle 30 est associée à chaque cale. Cette fente est visible à la figure 13 et à une longueur circonférentielle L supérieure à la longueur circonférentielle L₁ de la zone de fixation 18 mesurée au droit de sa zone de raccordement avec la partie périphérie externe 17.

En variante la longueur est inférieure à la longueur L₁, tout cela dépendant de manière précitée des applications.

De préférence la longueur est supérieure ou égale à la longueur circonférentielle séparant les trous 19 extrêmes des zones 18. Lorsqu'un seul trou 19 est prévu, la fente 30 s'étend de part et d'autre du trou.

Au droit ici de chaque zone de fixation 18 on trouve donc une fente 30 globalement d'orientation circonférentielle qui couvre tout ou en partie la zone de fixation 18.

Les fentes 30 sont implantées de préférence radialement en dessous des garnitures de friction 11 et de l'élément de progressivité 13, la partie périphérique externe 17 ayant une hauteur supérieure à celle des garnitures 11 et de l'élément de progressivité 13.

Ceci favorise un très bon découplage entre les fonctions de fixation et de progressivité Cela est favorable pour la ventilation du disque 10.

A la figure 4, en dehors des fentes 30, les parties périphériques 17 des supports 12 sont continues.

En variante figure 1 et 5 à 12, 14 et 15 les supports 12 sont dotés de premières fentes 16, 116, 216 débouchant à la périphérie externe des supports 12. Ces fentes 16, 116, 216 à leur extrémité interne débouchent dans les fentes circonférentielles 30.

Grâce aux fentes 16, 116, 216 on obtient une limitation des déformations en cône. On augmente également la flexibilité des supports 12, on allège ceux-ci. D'une manière générale on limite les déformations en combinaison avec les fentes circonférentielles 30, qui permettent une circulation d'air en dessous des garnitures 11 et de l'élément de progressivité 13.

Les premières fentes 16, 116, 216 en combinaison avec les fentes circonférentielles 30 selon l'invention, évitent les contraintes thermiques et limitent les échauffements.

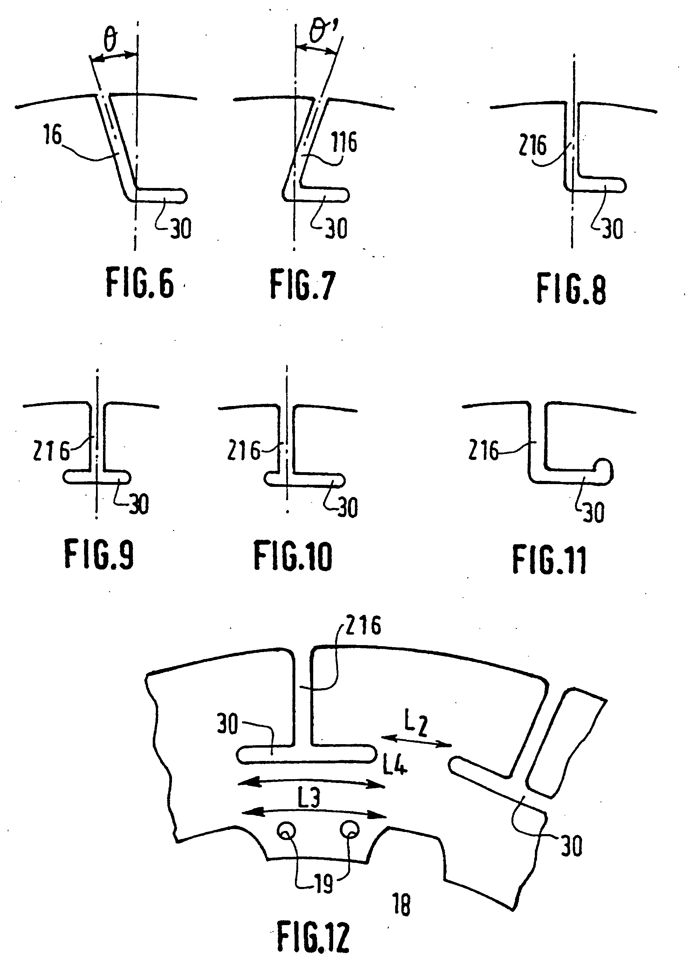

Les premières fentes peuvent être inclinées d'un angle θ par rapport à une direction radiale (fentes 16 des figures 1, 6, 14 et 15), elles peuvent être inclinées dans l'autre sens d'un angle θ' (fentes 116 de la figure 7) ou être d'orientation radiale (fentes 216 des figures 8 à 12). On peut ainsi optimiser les supports 12 en faisant varier les angles θ et θ', des figures 1, 6, 7, 14, 15 en fonction des applications.

Cet angle peut être positif ou négatif.

Dans les figures 6, 7, 8, 11, 14 et 15 les premières fentes 16, 116, 216 débouchent à l'une des extrémités d'une fente 30.

Dans les figures 9 et 12 les premières fentes 216 débouchent de manière symétrique dans une fente circonférentielle 30.

A la figure 10 la première fente 216 débouche de manière non symétrique dans une fente 30 entre les extrémités circonférentielles de celle-ci.

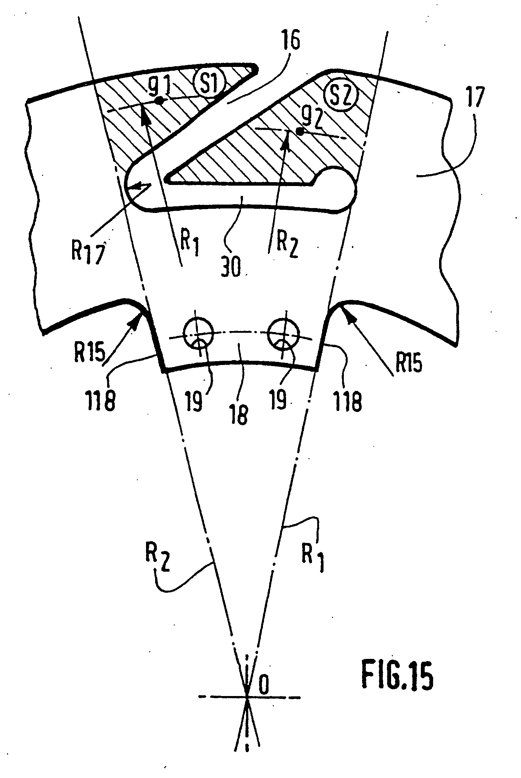

A la figure 11 l'autre extrémité de la fente 30 est épanouie et il en est de même à la figure 15.

Bien entendu à chaque fente 30 il n'est pas forcément associée une première fente 16, 116, 216.

Par exemple une fente 30 dépourvue d'une première fente peut être encadrée par deux fentes 30 dotées de premières fentes.

En variante les première fentes peuvent ne pas déboucher dans une fente circonférentielle 30.

On notera qu'à la figure 12 la longueur circonférentielle L₄ de la fente 30 est globalement égale à la longueur circonférentielle L₃ d'une zone de fixation 18 et que la longueur circonférentielle L₂ séparant deux fentes 30 est inférieure aux longueurs L₄ et L₃.

La longueur L₂ est fonction du couple à transmettre.

On notera que les fentes des figures 1, 6, 14 et 15 favorisent la transmission du couple dans un sens privilégié correspondant au sens direct (couple transmis du vilebrequin à l'arbre d'entrée de la boîte de vitesses).

En fonction du sens de rotation du moteur grâce aux premières fentes inclinées, se raccordant à une extrémité d'une fente circonférentielle 30 avantageusement par un arrondi, on privilégie une transmission plus important de couple dans un sens et ce en jouant sur l'angle θ qui permet d'augmenter la matière.

Il est important (figure 15) que la première fente inclinée 16 se raccorde par un arrondi de rayon R17 à la fente 30 pour diminuer les contraintes. Plus le rayon R17 est grand plus on diminue les contraintes.

De même les bords latéraux 118, d'orientation radiale (figue 15), des zones de fixation 18, pour diminuer les contraintes, se raccordent à la périphérie interne de la partie périphérique 17 par des arrondis de rayons R15. Il en est de même dans les autres figures pour diminuer les contraintes.

L'inclinaison de la première fente 16 est réalisée de préférence de façon à équilibrer les efforts de centrifugation.

Ainsi à la figure 15 une première fente inclinée 16 délimite, avec les rayons R1 et R2 passant par les extrémités d'une fente 30, deux zones d'aire S1 et S2 de centre de gravité respectivement g1 et g2. Soit R1 et R2 les rayons des centres de gravité g1 et g2 (o étant le centre d'un support 12) en ayant la relation S1 R1 = S2 R2 on équilibre les efforts dus à la force centrifuge. Bien entendu il faut prendre en considération les zones d'aire S1 et S2 d'une même pale délimitée par deux fentes 16. On symétrise ainsi les masses qui tirent sur les pales.

Grâce à l'invention le disque de friction 10 travaille dans de bonnes conditions et ce de manière simple et économique les fentes circonférentielles et les premières fentes 16, 116, 216 étant obtenues par découpage ou moulage des supports 12 de forme plane.

En variante figure 14 chaque fente circonférentielle 30 est séparée d'une autre fente 30 par un embouti 200 permettant de mieux contrôler la progressivité.

Les emboutis 200 relient donc entre elles les fentes 30.

Bien entendu la présente invention n'est pas limitée à l'exemple de réalisation décrit.

En particulier les supports 12 peuvent avoir la forme de ceux de la figure 2 du document FR-A-2 673 984. Plus précisément l'un au moins des supports 12 peut comporter un pli par l'intermédiaire duquel il rejoint l'autre support pour être accolé et fixé audit autre support. Les deux supports peuvent comporter chacun un pli par l'intermédiaire duquel ils se rejoignent pour leur fixation mutuelle à l'aide des organes de fixation 20, 40 précités. La présence des cales n'est donc pas obligatoire.

L'anneau de progressivité 13 de la figure 1 peut avoir une dimension radiales différente de celle de la garniture de friction 11.

Cet anneau 13 peut déborder intérieurement par rapport aux garnitures de friction 11.

L'anneau 13 peut avoir une dimension radiale inférieure à celle des garnitures de friction 11 et être ainsi légèrement en retrait par rapport à la périphérie interne des garnitures de friction 11, c'est-à-dire que le diamètre interne des garnitures de friction 11 peut être légèrement inférieur au diamètre interne de l'anneau 13. Ceci économise de la matière et permet de réduire la raideur de l'anneau 13. Les fentes circonférentielles 30 peuvent être à cheval par rapport à l'anneau 13 ou aux protubérances formant l'élément de progressivité. Les cales individuelles de la figure 1 peuvent être reliées entre elles à leur périphérie interne pour former un anneau crénelé unitaire. Dans ce cas on insère cet anneau entre les deux supports avant la fixation de l'élément de progressivité sur l'un au moins des supports.

Il en résulte que la cale peut être en variante continue.

L'anneau de progressivité 13 peut présenter des fentes identiques aux premières fentes et en regard desdites premières fentes.

## Revendications

1. Disque de friction pour friction d'embrayage comportant deux supports métalliques parallèles (12) avec chacun une partie périphérique externe (17), agencée radialement vers l'extérieur, de forme générale annulaire prolongée radialement vers le centre par des zones de fixation (18) à une pièce principale (50, 51, 151) de la friction d'embrayage, les zones de fixation (18) comportent au moins un trou (19) chacun pour le passage d'un organe de fixation (20, 40) à ladite pièce principale, deux garnitures de friction (11) disposées de part et d'autre des deux supports (12) et chacune adhérisée, surmoulée ou agrafée sur l'un des supports, un élément de progressivité (13) en matière élastique, formant ressort, interposé entre les deux supports (12),
**caractérisé en ce que** chaque zone de fixation (18) consiste en une patte trouée pour le passage d'au moins un organe de fixation (20, 40) et **en ce que**, radialement au delà de chaque patte de fixation (18) et en regard de celle-ci, les supports (12) comportent des fentes (30) globalement d'orientation circonférentielle.

2. Disque selon la revendication 1, **caractérisé en ce que** les fentes circonférentielles sont reliées entre elles par des emboutis (200).

3. Disque selon la revendication 2, **caractérisé en ce que** chaque support (12) comporte une pluralité de premières fentes (16, 116, 216) débouchant à la périphérie externe dudit support.

4. Disque selon la revendication 3, **caractérisé en ce que** les premières fentes (16, 116, 216) sont distinctes des fentes circonférentielles (30).

5. Disque selon la revendication 3, **caractérisé en ce que** les premières fentes (16, 116, 216) débouchent dans des fentes circonférentielles.

6. Disque selon la revendication 5, **caractérisé en ce que** à chaque fente circonférentielle (30) il est associé une première fente (16, 116, 216).

7. Disque selon la revendication 6, **caractérisé en ce qu'**un rayon raccorde une première fente (16, 116) à l'extrémité d'une fente circonférentielle (30) et **en ce que** la première fente (16, 116) est inclinée par rapport à une direction radiale.

8. Disque selon la revendication 1, **caractérisé en ce que** à chaque patte de fixation est associée une cale (22) de forme complémentaire, **en ce que** les supports (12) sont de forme plane, et **en ce que** les cales (22) sont interposées axialement entre deux pattes de fixation (18) en vis-à-vis.

9. Disque selon l'une quelconque des revendications précédentes, **caractérisé en ce que** l'élément de progressivité est fixé à au moins l'un des deux supports (12).

## Patentansprüche

1. Reibscheibe für eine Reibungskupplungsscheibe, umfassend zwei parallele Metallträger (12) mit jeweils einem radial außen angeordneten äußeren Umfangsteil (17) mit einer allgemeinen Ringform, der radial zur Mitte hin durch Befestigungsbereiche (18) zur Befestigung an einem Hauptteil (50, 51, 151) der Reibungskupplungsscheibe verlängert ist, wobei die Befestigungsbereiche (18) jeweils wenigstens ein Loch (19) für den Durchgang eines Befestigungsorgans (20, 40) zur Befestigung an dem besagten Hauptteil aufweisen, zwei beiderseits der beiden Träger (12) angeordnete und jeweils an einem der Träger durch Haftverbindung angebrachte, aufgeformte oder angefalzte Reibbeläge (11) sowie mindestens ein als Feder ausgebildetes Progressivitätselement (13) aus einem elastischen Werkstoff, das zwischen den beiden Trägern (12) eingefügt ist, **dadurch gekennzeichnet, dass** jeder Befestigungsbereich (18) aus einer Lasche besteht, die für den Durchgang wenigstens eines Befestigungsorgans (20, 40) gelocht ist, und dass radial außerhalb jeder Befestigungslasche (18) und dieser gegenüberliegend die Träger (12) insgesamt umfangsmäßig ausgerichtete Schlitze (30) umfassen.

2. Scheibe nach Anspruch 1, **dadurch gekennzeichnet, dass** die Umfangsschlitze durch Vertiefungen (200) miteinander verbunden sind.

3. Scheibe nach Anspruch 2, **dadurch gekennzeichnet, dass** jeder Träger (12) eine Mehrzahl von ersten Schlitzen (16, 116, 216) umfasst, die am äußeren Umfang des besagten Trägers münden.

4. Scheibe nach Anspruch 3, **dadurch gekennzeichnet, dass** die ersten Schlitze (16, 116, 216) von den Umfangsschlitzen (30) getrennt sind.

5. Scheibe nach Anspruch 3, **dadurch gekennzeichnet, dass** die ersten Schlitze (16, 116, 216) in Umfangsschlitzen münden.

6. Scheibe nach Anspruch 5, **dadurch gekenn-zeichnet, dass** jedem Umfangsschlitz (30) ein erster Schlitz (16, 116, 216) zugeordnet ist.

7. Scheibe nach Anspruch 6, **dadurch gekennzeichnet, dass** ein Radius einen ersten Schlitz (16, 116) mit dem Ende eines Umfangsschlitzes (30) verbindet und dass der erste Schlitz (16, 116) im Verhältnis zu einer radialen Richtung geneigt ist.

8. Scheibe nach Anspruch 1, **dadurch gekennzeichnet, dass** jeder Befestigungslasche ein komplementäres Passstück (22) zugeordnet ist, dass die Träger (12) eine ebene Form aufweisen, und dass die Passstücke (22) axial zwischen zwei gegenüberliegenden Befestigungslaschen (18) eingefügt sind.

9. Scheibe nach einem der vorangehenden Ansprüche, **dadurch gekennzeichnet, dass** das Progressivitätselement an wenigstens einem der beiden Träger (12) befestigt ist.

## Claims

1. A friction disc for a friction clutch, comprising two parallel metallic supports (12), each having an outer peripheral portion (17), disposed radially towards the outside and being of generally annular form extended radially towards the centre by fastening zones (18) for fastening to a main member (50, 51, 151) of the friction clutch, the fastening zones (18) having at least one hole (19), each for the passage of a fastening member (20, 40) for fastening to the said main member, two friction liners (11) disposed on either side of the two supports (12), each friction liner being adhesively bonded, moulded in place, or seamed, on one of the supports, and a progressivity element (13) of elastic material, constituting a spring, being interposed between the two supports (12) ,
**characterised in that** each fastening zone (18) consists of a lug which is perforated for the passage of at least one fastening member (20, 40), and **in that**, radially outside each fastening lug (18) and facing the latter, the supports (12) have slots (30) which are oriented generally circumferentially.

2. A disc according to Claim 1, **characterised in that** the circumferential slots are joined together by embossed elements (200).

3. A disc according to Claim 2, **characterised in that** each support (12) includes a plurality of first slots (16, 116, 216) which are open at the outer periphery of the said support.

4. A disc according to Claim 3, **characterised in that** the first slots (16, 116, 216) are separate from the circumferential slots (30).

5. A disc according to Claim 3, **characterised in that** the first slots (16, 116, 216) are open into circumferential slots.

6. A disc according to Claim 5, **characterised in that** a first slot (16, 116, 216) is associated with each circumferential slot (30).

7. A disc according to Claim 6, **characterised in that** a radius joins a first slot (16, 116) to the end of a circumf erential slot (30), and **in that** the first slot (16, 116) is inclined with respect to a radial direction.

8. A disc according to Claim 1, **characterised in that** a seating (22) of complementary form is associated with each fastening lug, **in that** the supports (12) are flat, and **in that** the seats (22) are interposed axially between two mutually facing fastening lugs (18).

9. A disc according to any one of the preceding Claims, **characterised in that** the progressivity element is fixed to at least one of the two supports (12).
